# EUROPÄISCHE PATENTSCHRIFT

(11) **EP 0 959 446 B1**
(45) Veröffentlichungstag und Bekanntmachung des Hinweises auf die Patenterteilung: **11.08.2004**
(21) Anmeldenummer: 99109810.4
(22) Anmeldetag: 19.05.1999
(51) Int. Cl.: G09F 3/04, G09F 3/00, B60C 13/00

(54) **Beschreibbare Vulkanisierettiketten sowie Vorrichtung und Verfahren zum Beschreiben und Anbringen derselben**
Writable vulcanisable labels and device and method to write on and to apply them
Etiquettes inscriptibles vulcanisables et dispositif et méthode pour écrire dessus et les fixer

(30) Priorität: 19.05.1998 DE 19822326
(43) Veröffentlichungstag der Anmeldung: 24.11.1999
(73) Patentinhaber: Dengler, Stefan, 75365 Calw-Stammheim (DE)
(72) Erfinder: Dengler, Stefan, 75365 Calw-Stammheim (DE)
(74) Vertreter: Patentanwälte Rüger, Barthelt & Abel

(56) Entgegenhaltungen:
- DE-A- 3 046 664
- DE-A- 4 330 700
- DE-A- 4 332 853
- DE-A- 19 526 695
- US-A- 5 603 796

## Beschreibung

Die Erfindung betrifft eine Vorrichtung und ein Verfahren zum Herstellen von vulkanisierbaren Etiketten, sogenannten Vulkanetten. Außerdem betrifft die Erfindung die Vulkanetten und mit solchen Vulkanetten versehene Gegenstände.

Technische Bauteile wie Reifen, Metall-Gummi-Verbundteile, Maschinenelemente, Silentbuchsen und ähnliche Gegenstände sind häufig mit Markierungen, Beschriftungen, graphischen Symbolen oder Logos zu versehen, die dauerhaft und gut lesbar an dem Bauteil angebracht werden sollen. Bspw. kann es von Interesse sein Schargennummern, Hersteller, Herstellzeitpunkt und ähnliche Sachinformation an dem betreffenden Bauteil anzubringen. Bei runderneuerten Reifen wird häufig gewünscht, die erneuerten Reifen zu beschriften, um solche Informationen nach dem Runderneuern gut lesbar an dem Reifen verfügbar zu halten.

Aus der DE 195 26 695 A1 sind plattenförmige Vulkanetten aus Kautschukmischung bekannt. Diese Vulkanetten sind aus vulkanisierbaren, d.h. im Wesentlichen noch nicht vernetztem Material ausgebildet. An ihrer Oberfläche tragen sie Schriftzeichen oder andere Symbole. Um zu verhindern, dass diese verschwimmen oder sonstwie unleserlich werden, werden die Vulkanetten zumindest im Bereich der Schriftzeichen unmittelbar unter der Oberfläche mittels elektromagnetischer oder Elektronenstrahlung, die auf die Oberseite der Vulkanette einwirkt, vorvernetzt d.h. vorvulkanisiert. Die Vulkanette wird dann an den Gummiartikel geheftet und mit diesem gemeinsam einem Vulkanisationsprozess unterworfen. Dabei wirken hohe Temperaturen und Druck auf das Bauteil und die Vulkanette ein. Die Vorvulkanisation der Oberfläche der Vulkanette unterbindet einerseits Fließbewegungen und ein Verschwimmen sowie Unkenntlichmachung der Schriftzeichen und andererseits ergibt sich eine ausreichende Haftung der Vulkanette an dem Gegenstand durch feste chemische Bindung zwischen der Vulkanette und dem Bauteil.

Die Strahlenvernetzung der Vulkanettenoberfläche stellt einen erheblichen Aufwand dar.

Weiter sind aus der DE 43 30 700 Vulkanetten aus Kautschukmischungen bekannt, die an ihrer Oberseite vorvulkanisiert sind. Die vorvulkanisierte Schicht ist mit farbigen Aufdrucken versehen, die bei dem nachfolgenden Vulkanisierprozess erhalten bleiben.

Aus der US-PS 5603796 ist ein Gummiklebeetikett bekannt, das an einem zuvor vulkanisierten Reifen in einem Klebeprozess zu befestigen ist. Das Gummiklebeetikett kann mit einer Laserbeschriftung versehen sein. Dazu wird die Reifenoberfläche aufgeraut und es wird ein geeignetes Lösungsmittel aufgebracht. Auf die so vorbereitete Reifenoberfläche wird das Gummiklebeetikett aufgedrückt und somit befestigt. Obwohl dieser Befestigungsvorgang als "Vulkanisierung" bezeichnet wird, handelt es sich doch letztlich lediglich um einen Klebevorgang. Die Vulkanisierung des Gummiklebeetiketts und des Reifens erfolgt in separaten Arbeitsvorgängen bevor beide Teile zusammen gebracht werden.

Reifen oder sonstige einem Vulkanisierprozess unterworfene Bauteile werden zur Durchführung des Vulkanisiervorgangs in eine entsprechende Form gelegt und in dieser Form eine gewisse Zeit höherem Druck und höherer Temperatur ausgesetzt. Das Bauteil wird dabei an die Formwandung angepresst, die sich dabei an dem Bauteil abformt. Dies können Markierungen, Beschriftungen und sonstige Strukturen der Formwand sein. Dies wird in der Praxis dazu verwendet, bspw. bei der Reifenherstellung, Reifengröße und Reifentyp sowie Hersteller und sonstige Informationen an dem Reifen in erhabener Schrift abzubilden. Dieser Weg ist jedoch dann meist nicht gangbar, wenn die an dem Reifen zu vermerkenden Zeichen, Symbole oder Darstellungen häufig oder auch nur gelegentlich wechseln.

Technische Bauteile unterliegen häufig Einwirkungen und Angriffen, die Spuren auf der Oberfläche hinterlassen und aufgebrachte Markierungen, bspw. Farbmarkierungen beschädigen, entfernen oder zumindest überdecken. Dies können Ölablagerungen, Verschmutzungen (bei Reifen), Abrasionswirkung (ebenfalls bei Reifen) oder Abnutzungserscheinungen sein. Wird an einem Reifen bspw. die Anzahl der Runderneuerungen vermerkt, muss dieser Vermerk auch gegen Ende der Lebensdauer der jeweiligen Runderneuerung noch gut lesbar sein, um den Reifen rechtzeitig aus dem Zyklus nehmen zu können. Bei Flugzeugreifen die sehr häufig (bis zu 10 mal) runderneuert werden, kann dies von lebenswichtiger Bedeutung sein. Auch bei sonstigen Bauteilen oder Reifen kann die dauerhafte Lesbarkeit von Beschriftungen, die Bauteilindividuell oder für kleinere Bauteilserien spezifisch sind, von wichtiger Bedeutung sein.

Davon ausgehend ist es Aufgabe der Erfindung, eine Möglichkeit zu schaffen, Bauelemente, die einem Vulkanisierprozess unterworfen werden sollen, vor Ausführung des Vulkanisiervorgangs mit einer Kennzeichnung, Markierung oder sonstigen Beschriftung oder.graphischen Darstellung zu versehen, die auch nach dem Vulkanisierprozess gut und dauerhaft lesbar und unlösbar mit dem Bauteil verbunden ist.

Diese Aufgabe wird durch das erfindungsgemäße Verfahren nach Anspruch 1 gelöst. Die Lösung wird auch ermöglicht durch das Bauteil nach Anspruch 7. Bei dem erfindungsgemäßen Verfahren wird in einem ersten Verfahrensschritt auf einem Träger, der vulkanisierbares Material aufweist und somit vulkanisierbar ist, die gewünschte Markierung, graphische Darstellung, Symbole oder sonstige Beschriftungen durch Lasergravur erzeugt. Dieser Träger wird in einem weiteren Verfahrensschritt auf das jeweilige Bauteil vulkanisiert. Dies ist insbesondere dann vorteilhaft, wenn das Bauteil ohnehin einem Vulkanisierprozess zu unterwerfen ist. Der beschriftete Träger, der auch als Vulkanette bezeichnet wird, kann in diesem Verfahrensschritt ohne zusätzlichen Aufwand hinsichtlich der Handhabung des Bauteils an dem Bauteil befestigt werden. Dies gilt sowohl für Bauteile allgemein, als auch für selbst aus vulkanisierbarem Material bestehende oder vulkanisierendes Material aufweisende Teile, wie bspw. Reifen. Die Vulkanetten werden in dem Vulkanisierprozess, den der Reifen unterworfen wird, an dem Reifen, bspw. an seiner Seitenwand anvulkanisiert und sind somit dauerhaft und unverlierbar an dem Reifen gehalten. Die an der Vulkanette angebrachte Lasergravur steht in gutem optischen Kontrast zu der vorzugsweise ansonsten glatten oder wenigstens einheitlich ausgebildeten Oberfläche der Vulkanette und ist somit gut lesbar. Ältere an dem Reifen vorhandene Gravuren können überdeckt werden. Bei der Laserbeschriftung der Vulkanetten wird immer eine geeignete Beschriftungsoberfläche bereitgestellt.

Die Vulkanetten können von einem längeren Band abgetrennt werden. Dabei ist es sowohl möglich, lediglich einzelne Abschnitte abzutrennen als auch aus dem Band rechteckige Vulkanetten mit bspw. abgerundeten Ecken oder mit sonstigen Außenumrissen abzutrennen. Vorzugsweise wird dazu eine Lasereinheit verwendet, die auch zum Gravieren des Trägers verwendet wird. Es kann bspw. durch Umschalten der Leistung und/oder Ändern der Vorschubgeschwindigkeit des Laserstrahls erreicht werden. Während bei der Lasergravur nur Oberflächenbereiche des Trägers im Brennfleck des Laserstrahls aufgeraut und abgetragen werden, wird beim Schnitt ein tieferer Einbrand erzeugt.

Die Gravur der Vulkanetten kann so tief sein, dass das Trägermaterial von der Gravur durchbrochen wird. Vorzugsweise aber ist die Gravur lediglich oberflächlich. Dennoch wird eine gute und dauerhafte Lesbarkeit der Vulkanette auch nach dem Aufvulkanisieren auf das zu kennzeichnende Bauteil erreicht. Die Vulkanette wird dabei mit ihrer Bauteilseite an das Bauteil, und mit ihrer Außenseite an eine entsprechende Vulkanisierform mit in diesem Bereich glatten Wänden angedrückt. Dennoch glättet sich die erzeugte Gravur während der Druck- und Hitzeeinwirkung nicht zu weit, so dass die Lesbarkeit sichergestellt bleibt. Dies gilt sowohl für einfarbige Vulkanetten als auch für Vulkanetten die mehrfarbig ausgebildet sind, bspw. indem sie mehrere unterschiedliche Materialschichten aufweisen. Dies kann die Lesbarkeit einer bspw. lediglich 2 bis 3 Zehntel Millimeter tiefen Gravur auf einer insgesamt etwa 1 Millimeter dicken Vulkanette deutlich erhöhen. Bspw. kann ein schwarzes Grundmaterial von 5 bis 8 Zehntel Millimetern mit einem gelben, bei der Gravur teilweise oder ganz anzutragendem Deckmaterial von 2 bis 3 Zehntel Millimeter als Trägermaterial Anwendung finden. Es ist auch möglich, ein vulkanisierbares Trägermaterial zu verwenden, das an der Gravurseite, bspw. eine Aluminiumfolie oder Bedampfung trägt, die bei der Lasergravur bereichsweise und selektiv abgetragen wird. Andere Oberflächenbeschichtungen sind möglich.

Vulkanetten, die wenigstens bauteilseitig mit vulkanisierem Material versehen sind, können vor dem Vulkanisierprozess an dem Bauteil befestigt werden. Weil sie noch nicht vulkanisiert sind, haften sie relativ gut an der Stelle an der sie angebracht sind, so dass das Bauteil handhabungssicher ist und bspw. in eine Form eingelegt werden kann, ohne dass die Vulkanette verloren geht.

Ein wesentlicher Vorteil der lasergravierten Vulkanetten liegt darin, dass sie individuell herstellbar sind. Dazu dient eine entsprechende Beschriftungseinrichtung, die eine Steuereinheit aufweist, die die Graviereinheit entsprechend empfangener Daten steuert. Die Daten können von einer manuellen Eingabe, von einer Schnittstelle oder von sonstigen Datenerfassungsmitteln herrühren. Die Beschriftungseinrichtung ist deshalb in der Lage, unterschiedliche Vulkanetten in Folge herzustellen. Diese werden, insbesondere wenn die Lasereinheit im Zweileistungsbetrieb betreibbar ist, sowohl mit der vorgesehenen Information graviert, als auch ausgeschnitten oder besäumt. Für die fortlaufende Herstellung gleicher oder unterschiedlicher Vulkanetten ist die Beschriftungseinrichtung vorzugsweise mit einem Bandvorschub versehen, der ein Trägermaterialband schrittweise an der Graviereinheit vorbeiführt.

Einzelheiten vorteilhafter Ausführungsformen der Erfindung ergeben sich aus der Zeichnung, Unteransprüchen und/oder der zugehörigen Beschreibung.

In der Zeichnung sind Ausführungsbeispiele der Erfindung veranschaulicht:
Fig. 1 ein mit vulkanisierbaren Etiketten versehenen Reifen in perspektivischer schematisierter Darstellung,
Fig. 2 den Reifen nach Figur 1, in einer Form während des Vulkanisierens bei einer Runderneuerungsprozess,.in schematisierter Schnittdarstellung,
Fig. 3 eine Beschriftungseinrichtung zur Lasergravur eines Trägermaterialbands und zum Abtrennen von Abschnitten von diesem,
Fig. 4 die Beschriftungseinrichtung nach Figur 3, in einer schematisierten Seitenansicht,
Fig. 5 ein zweischichtiges Trägermaterial in graviertem Zustand, in Schnittdarstellung mit Schnittführung quer zu einer eingravierten Linie,
Fig. 6 ein lasergraviertes einschichtiges Trägermaterial, in Schnittdarstellung, mit Schnittführung quer zu einer eingravierten Linie, und
Fig. 7 eine Ansicht des Bildschirms der Beschriftungseinrichtung nach Figur 3.

### Beschreibung:

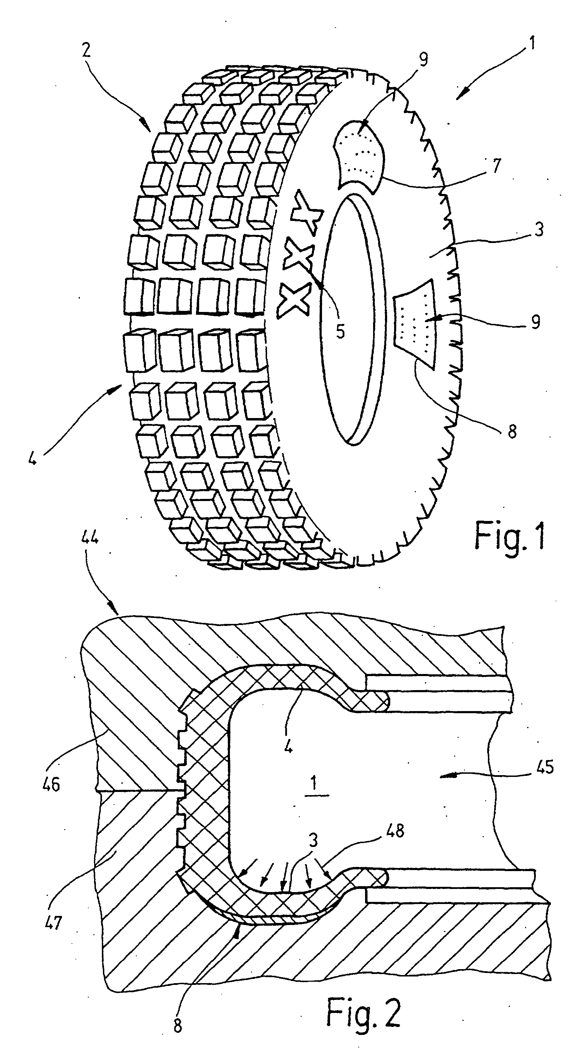

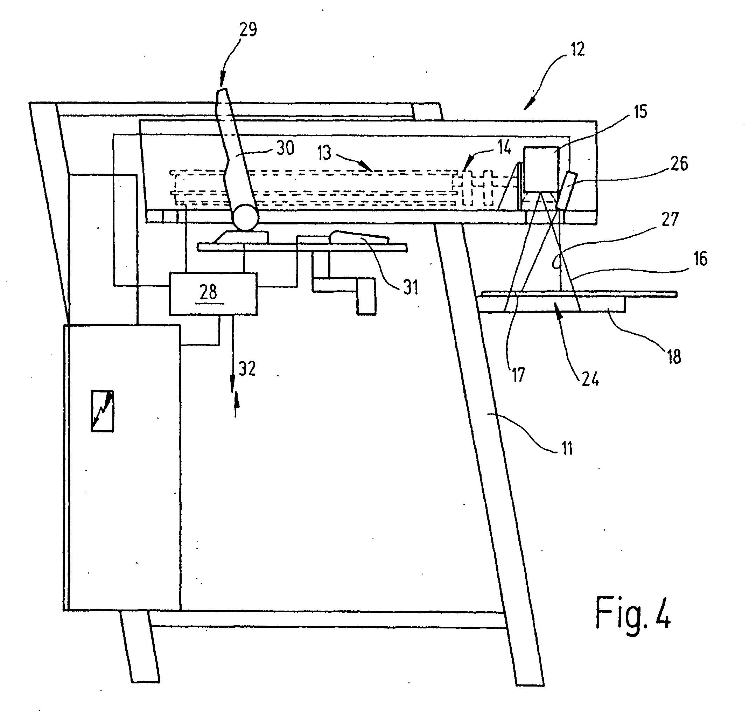

In Figur 1 ist ein Reifen 1 veranschaulicht, der in einem Runderneuerungsprozess mit einem neuen Profil 2 versehen worden ist. Der Reifen 1 weist Seitenwände 3, 4 auf, die üblicherweise Beschriftungen 5 tragen. Zusätzlich ist die Seitenwand 3 mit Vulkanetten 7, 8 versehen, die durch eine etwa 1mm dicke, auf die Seitenwand 3 des Reifens 1 vulkanisierte Gummifolie gebildet sind. Die Vulkanetten 7, 8 tragen eine oberflächliche Gravur 9, die bspw. Schrift, Zeichen, Logos, technische Information, Markennamen oder dgl. wiedergibt.

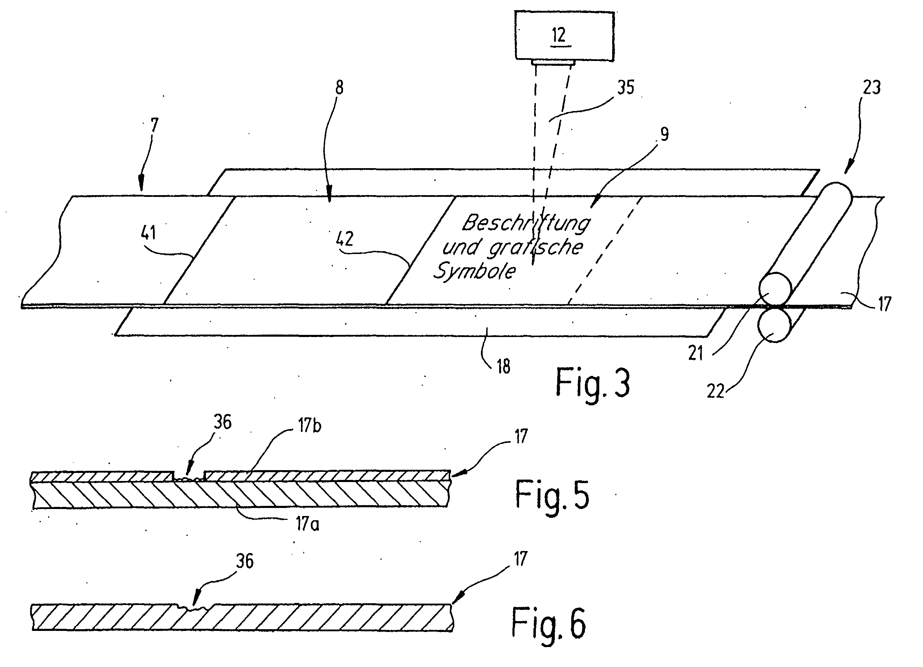

Solche Vulkanetten 7, 8 werden in einem separaten Herstellprozess erzeugt, der in Verbindung mit den Figuren 3 bis 6 ersichtlich wird. Zur Herstellung dient eine Beschriftungseinrichtung 10 nach den Figuren 3 und 4. Die Beschriftungseinrichtung 10 enthält ein Grundgestell 11, von dem eine Lasereinheit 12 getragen ist. Die Lasereinheit 12 enthält einen Laser 13, einen seinem Lichtaustritt vorgeschalteten Schutter 14 und einen Scanner 15, mit dem ein fokussierter Laserstrahl innerhalb eines in Figur 4 mit dick ausgezogenen Linien veranschaulichten Bereichs 16 bewegbar ist. Zur Aufnahme eines Bands 17 aus einem geeigneten Trägermaterial dient ein Tisch 18, der von dem Grundgestell 11 getragen ist. Das Band 17 wird mittels einer in Figur 13 lediglich symbolisch durch zwei Walzen 21, 22 veranschaulichten Vorschubeinrichtung 23 schrittweise über den Tisch 18 bewegt.

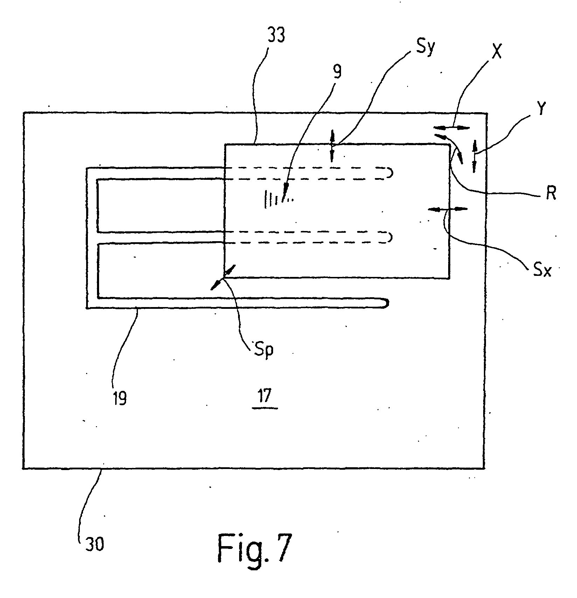

Das Band 17 kann ein Flachband mit zwei einander gegenüberliegenden Planseiten sein. Bedarfsweise können jedoch auch feste Strukturen 19, wie bspw. Logos, Linien, Tabellen oder dgl., vorgeprägt sein, wie in Figur 7 veranschaulicht ist. Dies hat den Vorteil, dass ein Kontrast zu der eher flachen Lasergravur herstellbar ist. Die vorgeprägten Bereiche 19 können erhaben oder eingedrückt sein.' Um die Positionierung der Lasergravur, bspw. hinsichtlich vorgeprägter Bereiche zu ermöglichen, ist der Gravierbereich 24, der von dem Bewegungsbereich 16 des Scanners 15 bestimmt wird, im Blickfeld einer Kamera 26 angeordnet, die einen in Figur 4 mit ausgezogenen Linien dargestellten Bilderfassungsbereich 27 aufweist.

Sowohl die Graviereinheit 12 als auch die Kamera 26 sind an eine lediglich schematisch angedeutete Steuereinheit 28 angeschlossen, die bspw. durch einen Mikrorechner oder einen Computer gebildet wird. Zu diesem gehört eine Anzeigeeinheit 29, die bspw. als Flachbildschirm 30 ausgebildet ist, sowie eine Eingabeeinheit 31, bspw. eine Tastatur. Außerdem kann die Steuereinheit 28 eine Schnittstelle 32 zur Datenkommunikation mit einer äußeren Rechenanlage oder mit einer sonstigen Anlage aufweisen.

Die Steuereinheit 28 ist derart programmiert und ausgebildet, dass der Flachbildschirm 30 oder eine sonstige Anzeigeeinrichtung zugleich das von der Kamera 26 aufgenomme Bild und die Beschriftung oder sonstige Gravur zur Anzeige bringt, die auf das Band 17 aufgebracht werden soll. Dazu wird auf dem Bildschirm 30 als Bildhintergrund zunächst das Band 17 dargestellt. Auf dem Bildschirm 30 ist außerdem ein Fenster 33 dargestellt, das die aufzubringende Gravur 9 enthält. Der Inhalt des Fensters 33 kann durch Eingaben an der Tastatur 31 oder über die Schnittstelle 32 geändert oder hergestellt werden. Das Fenster 33 ist gewissermaßen durchsichtig ausgebildet, d.h. das von der Kamera 26 aufgenommene Bild wird als Hintergrund für das Fenster 33 verwendet. Das Bild kann zur Kenntlichmachung abgewandelt oder gefälscht sein, bspw. in dem Helligkeitswerte, Kontrastwerte oder Farbwerte mehr oder weniger verändert werden. Außerdem kann das Feld 33 eine Umrahmung tragen. Mit geeigneten Eingabemitteln wie Mouse, Trackball, Joystick oder Tastatur ist das Feld 33 wahlfrei auf dem Bildschirm 30 verschiebar; so dass es an jede gewünschte Stelle plaziert werden kann. Dies ist durch Pfeile x für Horizontalverschiebung, y für Vertikalverschiebung und r für Rotation oder Drehung veranschaulicht. Außerdem die das Feld 33 skalierbar, wie durch Pfeile s, y und s, x angedeutet ist. Darüberhinaus ist es proportional vergrößerbar oder verkleinerbar wie der linke untere Pfeil sp veranschaulicht. Bedarfsweise kann das Anzeigefeld 33 in Teilfelder aufgesplittet werden. Außerdem können weitere der Kommuntikation dienende Felder auf dem Bildschirm 30 angezeigt werden, die dann das vorhandene Bild überblenden.

Die Steuereinheit 28 ist so ausgebildet oder programmiert, dass beim Auslösen des Graviervorgangs die von der Lasereinheit 12 erzeugte Gravur an ziemlich genau den Stellen des Bands 17 erzeugt wird, an denen sie zuvor auf dem Bildschirm 30 durch entsprechende Positionierung des Felds 33 angezeigt worden sind. Das Bild des Bands 17 ist ein Livebild. Der Graviervorgang kann somit zeitlich auf dem Monitor beobachtet werden. Nachstellungen hinsichtlich der Graviertiefe oder -qualität sind somit manuell ohne Weiteres möglich.

In Figur 5 und 6 sind verschiedene Ausführungsformen von Bändern 17 veranschaulicht, aus denen Vulkanetten herstellbar sind. Das Band 17 nach Figur 5 ist zweischichtig aufgebaut. Bei einer Gesamtdicke von etwa 1mm weist es eine bspw. farbig ausgebildete Grundschicht 17a aus nichtvulkanisiertem Material, bspw. Gummi auf. Auf diesem Material ist eine dünne Schicht von 2 bis 3 zehntel'Millimetern 17b angeordnet, die im vorliegenden Fall ebenfalls aus unvulkanisiertem Gummi besteht. Sie.kann bspw. schwarz sein, um einen Farbkontrast zu dem farbigen Trägermaterial 17a zu schaffen. Alternativ kann die Schicht 17b auch wesentlich dünner und/oder aus einem anderen Material, wie bspw. einem Metall ausgebildet sein. Die Gravur 9, die die Lasereinheit 12 mit ihrem Laserstrah ausbildete, ist in Figur 5 als geringfügige Vertiefung 36 von wenigen zehntel Millimetern in der Oberfläche des Bands 7 erkennbar. Im Bereich dieser Vertiefung 36 ist das Material der Schicht 17b weitgehend oder vollständig entfernt, so dass die darunterliegende Schicht 17a sichtbar wird. Ist die obere Schicht 17b bspw. schwarz und die darunterliegende Schicht 17a bspw. gelb, ist die in Figur 3 symbolisch dargestellte Beschriftung gelb auf schwarz lesbar.

Alternativ kann der in Figur 6 im Schnitt veranschaulichte Träger verwendet werden, der aus einem einzigen Material gleicher Färbung besteht. Die Gravur wird wiederum durch Vertiefungen von 1 bis 3 zehntel Millimeter tiefe gebildet. Die Strichbreite kann ebenfalls lediglich wenige zehntel Millimeter, ein Millimeter oder mehr betragen.

Bei der Kennzeichnung von Bauteilen mit Vulkanetten wird folgendermaßen vorgegangen:

Die Beschriftungseinrichtung nach Figur 3 oder 4 wird durch Eingabe an der Eingabeeinheit (Tastatur) 31 oder über die Datenverbindung 32 mit Information über die aufzubringende Gravur versorgt. Die Lasereinheit 12 bringt nun, wie in Figur 3 angedeutet, die gewünschten graphischen Informationen auf das Band 17, indem der Laserstrahl 15 die Oberfläche des Bands 17 graviert. Jeweils wenn eine Gravur beendet ist, trennt der Laserstrahl 35 von dem Band 17 einzelne Vulkanetten 7, 8 ab, wie durch dick durchgezogene Trennlinien 41, 42 in Figur 3 veranschaulicht ist.

Die so erzeugten Vulkanetten 7, 8 werden dann an den Reifen 1 oder an sonstige Bauteile geheftet. Sie halten dabei haftschlüssig an der Oberfläche ohne abzufallen. Der Reifen 1 wird nun in eine in Figur 2 schematisch veranschaulichte Vulkanisierform 44 eingelegt, die einen Hohlraum 45 zur Aufnahme des Reifens 1 aufweist. Die Vulkanisierform 44 weist an ihren Formhälften 46, 47 an der nach innen gewandten Seite ein glatte oder wenigstens bereichsweise glatte Oberfläche auf. Der Reifen 1 wird nun so in die Vulkanisierform 44 eingelegt, dass die Vulkanetten 7, 8 in Bereichen zu liegen kommen, bei denen die Innenwand der Vulkanisierform 44 glatt, d.h. nicht mit Profilen versehen ist. Ist die Vulkanisierform 44 geschlossen, wird sie unter Druck gesetzt, so dass die Seitenwand 3 des Reifens, wie durch Pfeile 48 angedeutet, gegen die Innenwand der Vulkanisierform 44 gedrückt wird, die Vulkanette 8 vulkanisiert nun aus und geht dabei mit dem Material der Seitenwand 3 des Reifens 1 eine innige stofffschlüssige Verbindung ein. Sie ist untrennbar mit dem Reifen 1 verbunden.

Nach Herausnahme des Reifens 1 aus der Vulkanisierform 44 ist die Gravur auf der nach außen gewandten Seite der Vulkanette dauerhaft sichtbar. Durch den Vulkanisierprozess ist die Gravur durchgehärtet und bleibt über die Lebensdauer des Reifens 1 lesbar.

Bei der Herstellung der Vulkanetten kann, wenn die Beschriftungseinrichtung 10 entsprechend ausgebildet ist, die Gravur 9 auch in vorhandene Muster oder Vorprägungen eingepasst werden. Dazu wird die Gravur mit dem Feld 33 in die gewünschte Größe, Form und Position gebracht. Danach wird der Graviervorgang ausgelöst. Neben Vulkanetten können auf diese Weise lose gravierbare Gegenstände auch direkt beschichtet werden.

Zur dauerhaften Kennzeichnung technischer Bauteile dienen Vulkanetten 8, die aus vulkanisiertem Material bestehen und durch Lasergravur wahlfrei beschriftbar sind. Die Vulkanetten werden durch Einwirkung von Druck und Wärme auf das zu kennzeichnende Bauteil gepresst und härten oder vulkanisieren an, bzw. auf diesem aus.

## Patentansprüche

1. Verfahren zum Anbringen von Markierungen, grafischen Darstellungen und/oder Symbolen an Bauteilen,
mit einem Verfahrensschritt, bei dem auf einem Träger, der noch nicht vulkanisiertes, vulkanisierbares Material aufweist, die Markierungen, grafischen Darstellungen und/oder Symbole durch Lasergravur erzeugt werden,
mit einem Verfahrensschritt, bei dem der Träger auf das Bauteil geheftet und in dem Vulkanisationsprozess, dem das Bauteil ohnehin zu unterwerfen ist, auf dieses vulkanisiert wird.

2. Verfahren nach Anspruch 1, **dadurch gekennzeichnet, dass** als Träger ein Band verwendet wird von dem jeweils mit der Markierung, der grafischen Darstellung und/oder den Symbolen versehene Abschnitte abgetrennt werden, bevor die Abschnitte auf das Bauteil vulkanisiert werden.

3. Verfahren nach Anspruch 1, **dadurch gekennzeichnet, dass** zum Abtrennen der Abschnitte von dem Band eine Lasereinheit verwendet wird, die auch zum Gravieren des Trägers verwendet wird.

4. Verfahren nach Anspruch 3, **dadurch gekennzeichnet, dass** die Lasereinheit zum Abtrennen mit einer höheren Leistung betrieben wird, als zum Gravieren.

5. Verfahren nach Anspruch 1, **dadurch gekennzeichnet, dass** als Träger flächiges Material verwendet wird, das vorwiegend aus unvulkanisiertem Gummi besteht.

6. Verfahren nach Anspruch 1, **dadurch gekennzeichnet, dass** das Bauteil ein Gummiteil, vorzugsweise ein Reifen ist.

7. Bauteil erhältlich durch das Verfahren nach Anspruch 1.

## Claims

1. Process for applying markings, graphic representations and/or symbols to structural parts,
with a process step, in which the markings, graphic representations and/or symbols are generated by laser engraving on a support, which has vulcanisable material that has not yet been vulcanised,
with a process step, in which the support is adhered to the structural part and is vulcanised onto this in the vulcanisation process the structural part is still to be subjected to.

2. Process according to Claim 1, **characterised in that** a band is used as support, from which sections provided respectively with the marking, graphic representation and/or symbols are separated before the sections are vulcanised onto the structural part.

3. Process according to Claim 1, **characterised in that** a laser unit, which is also used for engraving the support, is used to separate the sections from the band.

4. Process according to Claim 3, **characterised in that** the laser unit is operated at a higher power for the separation than for the engraving.

5. Process according to Claim 1, **characterised in that** sheet material made predominantly of unvulcanised rubber is used as support.

6. Process according to Claim 1, **characterised in that** the structural part is a rubber part, preferably a tyre.

7. Structural part obtainable by means of the process according to Claim 1.

## Revendications

1. Procédé pour fixer des marques, des représentations graphiques et/ou des symboles à des éléments, comprenant
une étape au cours de laquelle les marques, représentations graphiques et/ou symboles sont réalisés par gravure au laser sur un support présentant un matériau vulcanisable, n'ayant pas encore subi de vulcanisation,
une étape au cours de laquelle le support est maintenu sur l'élément et est fixé par vulcanisation à celui-ci pendant le processus de vulcanisation auquel ledit élément doit de toute manière être soumis.

2. Procédé selon la revendication 1, **caractérisé par le fait que** l'on utilise comme support une bande, dans laquelle on découpe des tronçons pourvus de la marque, de la représentation graphique et/ou des symboles, avant de fixer lesdits tronçons à l'élément par vulcanisation.

3. Procédé selon la revendication 1, **caractérisé par le fait que**, pour découper les tronçons dans la bande, on utilise une unité à laser qui sert également à la gravure du support.

4. Procédé selon la revendication 3, **caractérisé par le fait que** pour la découpe, on fait fonctionner l'unité à laser avec une puissance plus élevée que pour la gravure.

5. Procédé selon la revendication 1, **caractérisé par le fait que** l'on utilise comme support un produit plat qui est constitué principalement de caoutchouc non vulcanisé.

6. Procédé selon la revendication 1, **caractérisé par le fait que** l'élément est un élément en caoutchouc, de préférence un pneumatique.

7. Elément pouvant être réalisé selon le procédé de la revendication 1.
